# NEUE EUROPÄISCHE PATENTSCHRIFT

(11) **EP 0 759 151 B2**
(45) Veröffentlichungstag und Bekanntmachung des Hinweises auf die Entscheidung über den Einspruch: **14.02.2007**
(45) Hinweis auf die Patenterteilung: 03.01.2001
(21) Anmeldenummer: 95915800.7
(22) Anmeldetag: 19.04.1995
(51) Int. Cl.: G01C 21/20

(54) **KORREKTURVERFAHREN UND NAVIGATIONSSYSTEM FÜR DIE KOPPELORTUNG EINES KRAFTFAHRZEUGS**
CORRECTION PROCESS AND NAVIGATION SYSTEM FOR THE COMPOUND LOCATION OF A MOTOR VEHICLE
PROCEDE DE CORRECTION ET SYSTEME DE NAVIGATION POUR LE REPERAGE A L'ESTIME D'UN VEHICULE A MOTEUR

(30) Priorität: 06.05.1994 DE 4415993
(43) Veröffentlichungstag der Anmeldung: 26.02.1997
(73) Patentinhaber: ROBERT BOSCH GMBH, 70442 Stuttgart (DE)
(72) Erfinder: KREFT, Peter, D-30539 Hannover (DE)
(74) Vertreter: Friedmann, Jürgen
(86) Internationale Anmeldenummer: PCT/DE1995/000536
(87) Internationale Veröffentlichungsnummer: WO 1995/030881

(56) Entgegenhaltungen:
- EP-A- 0 166 547
- EP-A- 0 314 806
- EP-A- 0 471 405
- WO-A-93/23821
- US-A- 4 964 052
- PATENT ABSTRACTS OF JAPAN vol. 013 no. 382 (P-923) ,24.August 1989 & JP,A,01 134209 (SONY CORP) 26.Mai 1989,

## Beschreibung

### Stand der Technik

Die Erfindung geht aus von einem Korrekturverfahren für die Koppelortung nach der Gattung des Anspruchs 1. Bei einem kartengestützten Navigationssystem ist schon bekannt, die Positionsbestimmung durch eine Koppelortung derart durchzuführen, daß die von den Sensoren eines Kraftfahrzeugs gelieferten Daten mit denen einer digitalisierten Straßenkarte verglichen werden. Die von der Koppelortung ermittelte Fahrzeugposition wird korrigiert, wobei das Fahrzeug auf eine in der Nähe verlaufende Straße aufgesetzt wird. Verlaufen jedoch mehrere Straßen im Vergleich zur Fahrtrichtung des Fahrzeuges in einem ähnlichen Winkel, dann kann es vorkommen, daß das Fahrzeug auf die falsche Straße aufgesetzt wird. Im Verlauf der weiteren Fahrt bleibt jedoch das Fahrzeug auf dieser "falschen Straße", da eine weitere Überprüfung auf Richtigkeit dieser Positionskorrektur nicht durchgeführt wird.

Bei dem Navigationssystem der EP 0314 806 A1 wird für die geschätzte Fahrzeugposition ein Fehlerbereich bestimmt, dessen Größe von den Toleranzen der Sensoren für die Wegstrecke und die Fahrtrichtung vorbestimmt ist. Mittels eines Rechners werden für alle Straßen innerhalb des Fehlerbereich die Fahrzeugpositionen berechnet, die für eine gegebene Fahrsituation gegeben sind. Durch Schätzung der Abstände und anderer Parameter wird die Fahrzeugposition als Istposition bestimmt, deren Straßenverlauf am nächsten liegt. Bei diesem Koppelverfahren ergibt sich das Problem, daß bei einem engen Straßennetz mit mehreren dicht beieinanderliegenden Prallelpfaden nicht Immer die Straße gefunden werden kann, auf der das Fahrzeug tatsächlich fährt.

### Vorteile der Erfindung

Das erfindungsgemäße Korrekturverfahren nach dem Anspruch 1 hat demgegenüber den Vorteil, daß mehrere mögliche Fahrzeugpositionen gleichzeitig (parallel) berechnet werden, wobei alle Fahrwege innerhalb eines Fahrgebietes berücksichtigt werden. Selbst wenn ein Hauptpfad für die wahrscheinlichste Fahrzeug-Position gefunden wurde, bleibt dieser nur solange erhalten, bis ein Parallelpfad aufgrund von Plausibilitätsbetrachtungen die größere Wahrscheinlichkeit für die Fahrzeugposition erreicht. Dadurch ergibt sich der Vorteil, daß die Navigation zuverlässiger wird und das Fahrzeug stets auch auf der Straße lokalisiert wird, auf der es sich tatsächlich befindet.

Durch die in den abhängigen Ansprüchen aufgeführten Maßnahmen sind vorteilhafte Weiterbildungen und Verbesserungen des Korrekturverfahrens nach Anspruch 1 möglich. Besonders vorteilhaft ist, daß durch die Einbeziehung der Meßtoleranzen der Sensoren und/oder des Navigationsgerätes der Fehlerbereich stets so bemessen wird, daß sich das Fahrzeug mit Sicherheit innerhalb der Fehlerbereiche befindet. Dadurch wird gewährleistet, daß für alle Straßen im Fahrgebiet die möglichen Standorte für das Fahrzeug erfaßt werden.

Günstig ist weiterhin, die Straße als Hauptpfad auszuwählen, dessen Richtung in etwa mit der des gekoppelten Fahrweges übereinstimmt und die diesem am nächsten liegt. Wird im Verlauf weiterer Messungen dieser Hauptpfad beispielsweise auch unter Berücksichtigung der Lebensdauer des Pfades oder des Neigungswinkels derneut ausgewählt, dann ist die Wahrscheinlichkeit groß, daß dieser dem tatsächlichen Fahrweg des Fahrzeugs entspricht.

Um beispielsweise bei parallel laufenden Straßen, die streckenweise in einem engen Abstand verlaufen, ein Hin- und Herwechseln der wahrscheinlichsten Fahrzeugposition (Hauptpfad-Position) zu vermeiden, wird eine Bewertungshysterese vorgesehen, so daß eine Änderung des Hauptpfades erst dann erfolgt, wenn durch mehrere Messungen sich diese als plausibel erwiesen hat.

Bei der Längenmessung des Fahrweges treten sensorbedingte Fehler auf, die auf einfache Weise dann erkannt werden können, wenn das Fahrzeug eine Auslenkung oder eine Abbiegung an einer Kreuzung durchführt. Da die Position der Kreuzung durch ihre exakten Koordinaten festgelegt ist, ergibt sich somit ein Bezugspunkt zwischen zwei Meßmarken, die für die Korrektur der Längenmessung verwendbar ist.

Da die Positionsbestimmung des Fahrzeuges auch mit Navigationssatelliten erfolgen kann, können quer zur Fahrtrichtung auftretende Fehler am einfachsten dadurch beseitigt werden, daß das Fahrzeug quer zur Fahrtrichtung rechnerisch auf allen ungefähr parallel verlaufenden Straßen aufgesetzt wird. Diese Parallelpfade werden bei der weiteren Fahrt weiterverfolgt und dabei so überprüft, daß nach einer Plausibilitätsprüfung der wahrscheinlichste Parallelpfad als neuer Hauptpfad bestimmt wird.

Vorteilhaft ist weiter, daß bei Verwendung der Erfindung in einem Ziel führungssystem die Routensuche so durchgeführt wird, daß der Hauptpfad als Ausgangspunkt für die Routenberechnung verwendet wird. Auch kann bei Pfad-Mehrdeutigkeiten (zwei oder mehrere Pfade mit nahezu gleicher Plausibilität) die Zielroute das Entscheidungskriterium zur des Hauptpfadauswahl werden, da die Wahrscheinlichkeit groß ist, daß der Fahrzeugführer der vom System empfohlenen Route folgt. Mittels eines Parallelpfad-Bewerters und Vergleichers kann dann aus den errechneten Parallelpfaden der gewünschte Hauptpfad jederzeit korrigiert werden. Hat das Navigationssystem eine Anzeige für eine Straßenkarte, dann kann der aktuelle Hauptpfad auf einer Anzeige entsprechend markiert werden.

### Zeichnung

Ein Ausführungsbeispiel der Erfindung ist in der Zeichnung dargestellt und in der nachfolgenden Beschreibung näher erläutert. Es zeigen Figur 1 ein erstes Blockschaltbild, Figur 2 zeigt ein zweites Blockschaltbild, Figur 3 zeigt einen Funktionsplan, Figur 4 zeigt einen Teil einer digitalisierten Straßenkarte, Figur 5 zeigt einen weiteren Teil einer digitalisierten Straßenkarte und Figur 6 zeigt einen dritten Teil einer Straßenkarte.

### Beschreibung des Ausführungsbeispiels

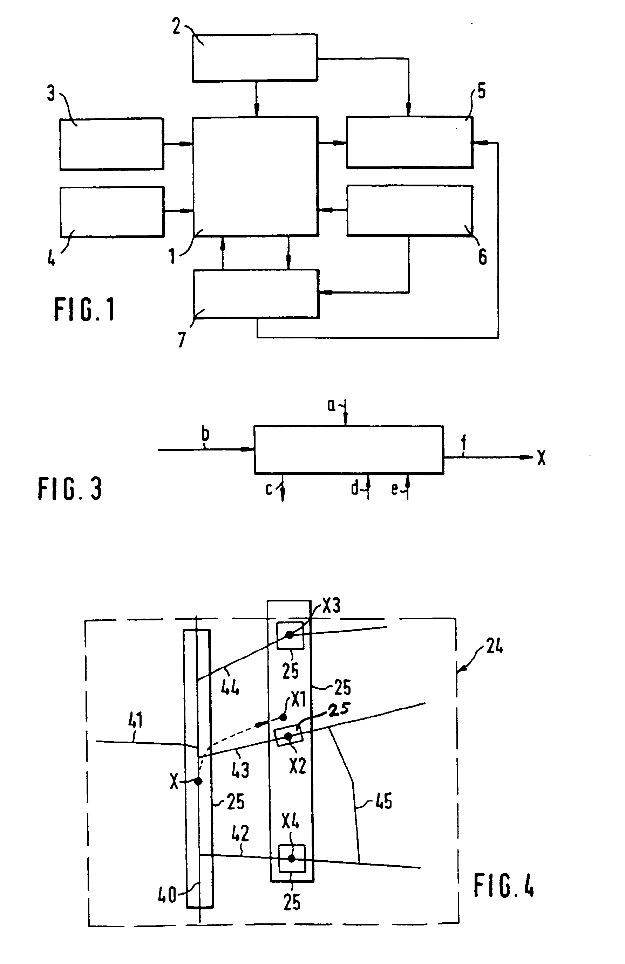

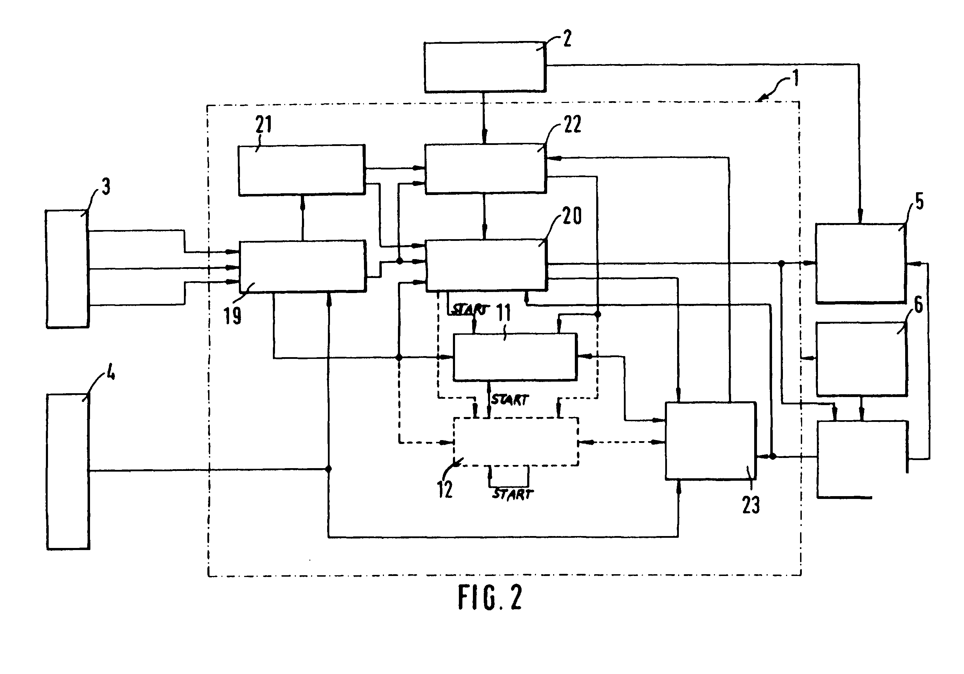

Figur 1 zeigt ein erstes Blockschaltbild eines kartengestützten Navigationssystems, bei dem eine Recheneinheit 1 eingangsseitig mit Fahrzeugsensoren 3 zur Erfassung der Fahrtrichtung und Fahrtstrecke verbunden ist. Desweiteren ist ein Satellitennavigationsempfänger (z.B. GPS-Empfänger) 4 angeschlossen, mit dem ebenfalls eine Positionsbestimmung des Fahrzeugs möglich ist. Desweiteren ist die Recheneinheit 1 mit einer Ausgabeeinheit 5, beispielsweise einem Display oder einer akustischen Ausgabe verbunden. Ferner ist eine Eingabeeinheit 6 und eine Zielführungseinheit 7 mit der Recheneinheit 1 verbunden. Die Zielführungseinheit 7 oder der Satelliten-Empfänger 4 sind wahlweise vorgesehen.

Figur 2 zeigt in detaillierter Ausführung ein zweites Blockschaltbild des Navigationssystems, bei dem die Recheneinheit 1 mit mehreren Funktionsblökken dargestellt ist. Die Recheneinheit 1 enthält eine Koppelortung 19, in die die Signale der Sensoren 3 und/oder des Satellitenempfängers 4 eingegeben werden. Die Koppelortung 19 berechnet aus den Sensorsignalen und der vorherigen Position eine neue Position für das Fahrzeug. Das Koppelortungsergebnis und die Sensorauswertung werden auf einen Fehlerschätzer 21 gegeben, der aufgrund von bekannten Toleranzfehlern einen Fehlerbereich 25 festlegt (Figur 4). Der Fehlerbereich 25 wird in einen Selektor 22 gegeben, der einerseits mit dem Kartenspeicher 2 verbunden ist. Der Kartenspeicher 2 gibt die Straßen an den Selektor 22, die in das Fahrgebiet 24 fallen. Dieses Fahrgebiet 24 entspricht dann dem hauptpfad und Parallelpfad-Gebiet der Straßenkarte (Figur 4).

Der Selektor 22 ist mit einem Steuerrechner 20 verbunden und gibt das Hauptpfad- und Parallelpfad-Gebiet an den Steuerrechner 20 weiter. Desweiteren ist der Steuerrechner 20 mit der Koppelortung 19 verbunden und erhält von dieser die Koppelortungsdaten für das Fahrzeug. Der Steuerrechner bestimmt zunächst unabhängig von den Parallelpfaden den Hauptpfad. Weitere mögliche Fahrzeugpositionen neben dem Hauptpfad (Parallelpfade) werden hier festgestellt und auf den Parallelpfadrechnern 11, 12 weiterverfolgt. Jeder Parallelpfadrechner kann wiederum mehrere plausible Fahrzeugpositionen erkennen und daraufhin weitere Parallelpfade auf den Parallelpfadrechnern starten. Die Parallelpfadrechner werden über entsprechende Steuerleitungen START gesteuert. Jeder Parallelpfadrechner wird dabei mit dem Kartenausschnitt des Fahrgebietes 24 über den Selektor 22 versorgt.

Die Parallelpfadrechner 11, 12 sind mit einem Parallelpfad-Bewerter und Vergleicher 23 verbunden. Der Parallelpfad-Bewerter/Vergleicher bewertet die Parallelpfade aufgrund ihrer Statusinformationen (z.B. Übereinstimmung der Fahrtrichtung und der Straßenrichtung). Die im Vergleich der Parallelpfade und der Hauptpfad-Plausibilität nicht mehr plausiblen Parallelpfade werden gelöscht.

Auch die Information der absoluten Fahrzeugposition und des geschätzten Streubereichs einer Satellitennavigationsempfangs- und Auswerteeinrichtung 4 kann das Löschen von Parallelpfaden, deren Position sich nicht mehr im Streubereich der Satellitennavigations-Position befinden, bewirken.

Desweiteren ist der Parallelpfad-Vergleicher 23 mit der Koppelortung 19 verbunden, an die er Korrekturdaten für die Fahrzeugposition liefern kann (Pfadkorrektur).

Bei Verwendung einer Zielführungseinheit 7 gibt diese ihre Daten ebenfalls an den Parallelpfad-Vergleicher 23, damit bei Pfadmehrdeutigkeiten der Pfad als Hauptpfad ausgewählt wird, der ein Element der Route zum Ziel bildet.

Eine Korrektur der Koppelortungsposition kann auch direkt von der Satellitenempfangs- und Auswerteeinrichtung 4 erfolgen.

Der Steuerrechner 20 ist mit einer Ausgabeeinheit 5 verbunden, auf der beispielsweise bei einer graphischen Darstellung ein Straßenausschnitt mit dem Hauptpfad und einer Markierung des Fahrzeugs dargestellt ist. Es können aber auch Richtungspfeile/Fahrempfehlungen oder eine akustische Ausgabe über die Zielführungseinheit 7 vorgesehen sein.

Die Eingabeeinheit 6 ist einerseits mit der Recheneinheit 1 verbunden, andererseits mit der Zielführungseinheit 7, so daß u.a. die Zieleingabe eingegeben werden kann.

Im folgenden wird anhand der Figuren 3 bis 6 die Funktionsweise dieser Anordnung näher erläutert.

Figur 3 zeigt beispielshaft einen Funktionsplan für die Positionsberechnung und Statusbestimmung eines Parallelpfades durch den Parallelpfadrechner 11, 12. Beispielsweise soll die Fahrzeugposition X auf einem Parallelpfad 31 berechnet werden, der innerhalb des Fahrgebiets 24 liegt. Nach dem Startsignal d entnimmt der Parallelpfadrechner 11, 12 dem Kartenspeicher 2 den Kartenteil, der dem Fahrgebiet 24 entspricht (Position a). In Position b wird die Fahrtrichtung und die Fahrtstrecke des Kraftfahrzeugs, die von der Koppelortung 19 ermittelt wurde, eingegeben. Am Ausgang c kann ein weiterer Parallelpfadrechner 11, 12 gestartet werden, falls bei dieser Positionsberechnung des Fahrzeugs erneut Pfadmehrdeutigkeiten entstehen. Zusätzlich zu der Position wird noch ein Status bestimmt, in dem beispielsweise eine aktuelle Übereinstimmung zwischen der Fahrtrichtung und des Straßenwinkels festgelegt ist. Desweiteren kann in der Statusinformation beispielsweise ein Wahrscheinlichkeitsfaktor für die Fahrzeugposition festgelegt sein. Auch enthält die Statusinformation Angaben über die Lebensdauer des Parallelpfades. Sowohl die Positions- als auch die Statusbestimmung wird über einen Ausgang 11 an den Parallelpfad-Vergleicher 23 geleitet, der aus allen vorliegenden Informationen auf der Grundlage von Plausibilitätsprüfungen einen Hauptpfad und aktuelle Parallelpfade ausgibt. Beispielsweise kann auch der Neigungswinkel einer Fahrstraße mit dem des Fahrzeugs verglichen werden und daraus der Hauptpfad bestimmt werden. Fällt ein Parallelpfad nicht mehr in das Fahrgebiet oder stimmt er mit dem Koppelkurs nicht mehr überein, dann kann er über einen Eingang e gelöscht werden. Der Funktionsplan kann als Programm für den Rechner 1 ausgebildet sein.

Figur 4 zeigt ein Fahrgebiet 24, in dem die befahrbaren Straßen 40 bis 45 dargestellt sind. Es wird angenommen, daß sich das Fahrzeug zunächst in Position X auf der Straße 40 befindet, die im Augenblick als Hauptpfad festgelegt ist. Biegt nun das Fahrzeug rechts ab, dann ergibt sich aufgrund der Mitkopplung und bedingt durch Winkel- und Längenfehler der Fahrzeugsensoren eine Position X1. Wegen der Fehler wird um die Position X1 wie bereits um die Position X, ein Fehlerbereich 25 gebildet. Der Fehlerbereich 25 kann für jede berechnete Position X ... X4 unterschiedlich groß sein. Die Größe des Fehlerbereichs ist durch die vorgegebenen Toleranzen bestimmt. Figur 4 zeigt daher unterschiedliche Fehlerbereiche 25 für die einzelnen Positionen X ... X4. Das große, rechteckige Fehlerfeld 25 der Position X wandert beispielsweise mit der neuen Fahrzeugposition X1 mit und verändert dabei seine Breite. Daraus ergibt sich, daß die tatsächliche Fahrzeugposition in diesem Feld liegt. Die neue Position X2 wird daher auf der Straße 43 angenommen , die der berechneten Positon X1 am nächsten folgt. Der Steuerrechner 20 ermittelt nun aufgrund des Abbiegewinkels des Fahrzeugs im Vergleich zu allen Straßen, die einen ähnlichen Winkel zum bisherigen Hauptpfad 40 gebildet haben, auf den Parallelpfaden 42, 43 und 44 die möglichen Positionen X2, X3 und X4 mit den entsprechenden neuen Fehlerbereichen 25. Die Straßen 42, 43, 44 befinden sich im Fehlerbereich der Pfadposition X1. Die Straße 41 bildet einen Abbiegewinkel in die entgegengesetzte Richtung und kommt daher für die Positionsbestimmung nicht mehr in Frage. Das beschriebene Verfahren, bei dem Parallelpfadpositionen (hier X2, X3 und X4 auf den Straßen 44, 43 und 42) aus dem Fehlerbereich 25 des Hauptpfades hervorgehen, kann gleichermaßen durch die Erzeugung von Parallelpfaden aus dem Fehlerbereich 25 eines Parallelpfades angewendet werden. Der Fehlerbereich 25 umfaßt den Fahrtrichtungsmeßfehler und einen eindimensionalen Aufenthaltsbereich (möglicher Längenfehler) oder einen zweidimensionalen Aufenthaltsbereich (Quer- und Längsfehler der angenommenen Position). Aufgrund von Plausibilitätsüberlegungen wird aus den Positionen X1 bis X4 die Position X2 mit dem neuen Fehlerfeld 25 als neuen Hauptpfad ausgewählt, für die die größte Wahrscheinlichkeit der Fahrzeugposition besteht. Die Positionen X3, X4 auf den Parallelpfaden 42, 44 werden weiter berechnet und bei der nächsten Auswahl wieder berücksichtigt. Sollte bei einer der nächsten Positionsbestimmungen einer der Parallelpfade 42 oder 44 als Hauptpfad in Frage kommen, dann würde einer der beiden Parallelpfade als neuer Hauptpfad bestimmt werden. Um in Grenzfällen ein häufiges Hin- und Herspringen der Fahrzeugposition X2 zu vermeiden, ist zur Bewertung eine zeitliche oder wegstreckenbezogene Hysterese vorgesehen, so daß eine Änderung der Bestimmung eines Parallelpfades als neuer Hauptpfad erst aufgrund einiger Meßzyklen oder einer bestimmten zurückgelegten Wegstrecke erfolgt.

Der Figur 4 ist weiter entnehmbar, daß bei einer Abbiegung in den neuen Hauptpfad 43 der Abbiegepunkt auf der Kreuzung 43, 40 als definierter Korrelationspunkt für die Längenmessung verwendet werden kann. Alternativ kann die Differenz X1 - X2 zur Längenkorrektur verwendet werden. Entsprechend ist das Verfahren zur Ermittlung der Parallelpfadpositionen x3 und x4 durchzuführen.

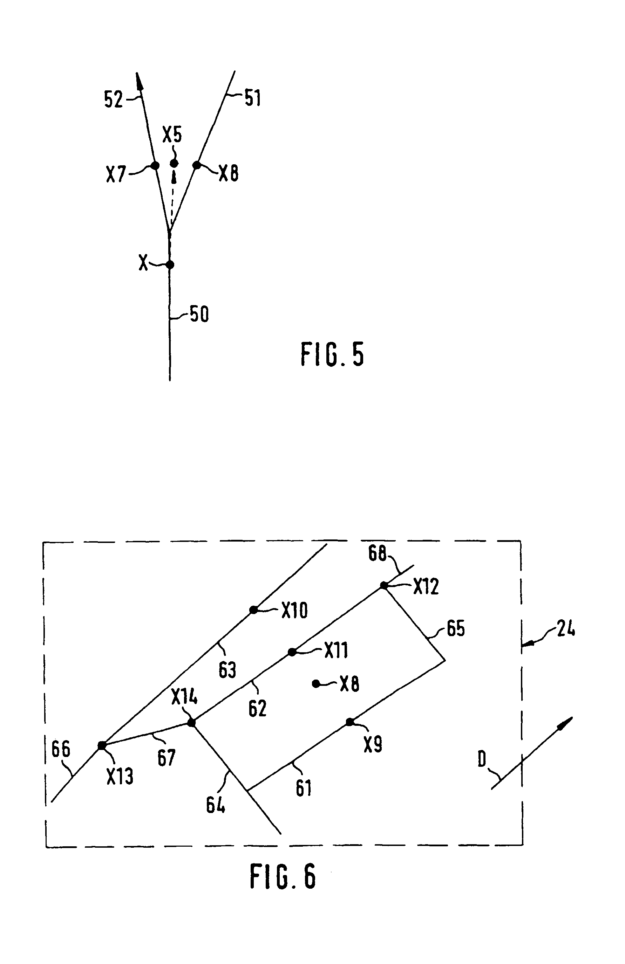

Ähnlich wie die Längenkorrektur gemäß der Figur 4 kann eine Positionskorrektur gemäß der Figur 5 durchgeführt werden. Beispielsweise befindet sich das Fahrzeug auf dem Hauptpfad 50 in der Position X. Es wird nun angenommen, daß sich der Hauptpfad 50 an einer Gabelung in zwei Parallelpfade 51, 52 aufteilt. Aufgrund der Koppelortung würde sich das Fahrzeug zu einem bestimmten Zeitpunkt in der Position X5 befinden. Da die Position X5 kein Standort auf einer Straße ist, sind mögliche Positionen X6 auf dem Parallelpfad 51 oder X7 auf dem Parallelpfad 52 annehmbar. Bei wiederholter Positionsbestimmung ergibt sich beispielsweise auch aufgrund der empfohlenen Route zum Ziel eine Wahrscheinlichkeit für die Position X7 auf dem Parallelpfad 52, der nun als Hauptpfad weiterverfolgt wird. Der Parallelpfad 51 ist weiterhin relevant und wird mit dem Parallelpfadrechner 11, 12 weiterhin berechnet. Aufgrund der Winkeländerung von Position X5 auf X7 ergibt sich ein Korrekturwert für die Richtungsbestimmung, die der weiteren Kuppelortung zugrundegelegt werden kann.

Figur 6 zeigt einen dritten Teil einer Straßenkarte eines Navigationssystems, bei dem ein Satellitennavigations-Empfänger 4 (z.B. GPS) für die Koppelortungskorrektur verwendet wird. Der Satellitennavigations-Empfänger ermittelt seine Position aus dem Standort von mehreren Navigationssatelliten. Diese Positionsbestimmung ist ebenfalls mit einem gewissen Fehler behaftet. Dieser Fehler wird ähnlich wie bei den Beispielen der Figuren 4 oder 5 kompensiert. In dem Fehlerfeld 24 der Figur 6 sind Straßenabschnitte/Parallelpfade 61 bis 68 dargestellt. Ermittelt beispielsweise der GPS-Empfänger 4 als möglichen Standort für das Fahrzeug die Position X8, dann wird in Fahrtrichtung D gesehen, zusätzlich die Position X9 auf dem Parallelpfad 61 und X10 auf dem Parallelpfad 63 berechnet. Aber auch die Positionen X13 auf 66, X14 auf 67 und X12 auf 68 können berechnet werden. Eine Position des Kraftfahrzeugs auf den Parallelpfaden 64 oder 65 ist aus Plausibilitätsgründen unwahrscheinlich und scheidet daher aus. Im weiteren Verlauf ergibt sich durch Neuberechnung die größte Wahrscheinlichkeit beispielsweise für eine Position X11 auf dem Parallelpfad 62, der nun zum Hauptpfad wird. Das Kraftfahrzeug wird nun an der Position X11 angenommen und diese Position beispielsweise auf einem Display 5 ausgegeben. Die Positionen X9, X10, X12, X13, X14 auf den ursprünglichen Straßen 61, 63, 68, 66, 67 werden zur Kontrolle des Hauptpfades 62 weiterverfolgt. Sie werden aber auf dem Display 5 nicht angezeigt.

Ist das Navigationssystem beispielsweise mit einem Zielführungsgerät 7 gekoppelt, dann wird nach Eingabe eines Ziels über die Eingabe 6 von der Recheneinheit 1 eine bestimmte Zielroute ausgesucht. Die Zielroute wird nun so gelegt, daß sie mit dem neuen Hauptpfad 62 als Startposition berechnet wird.

Die einzelnen Baugruppen des Navigationssystems bzw. der Recheneinheit 1 wie die Koppelortung 19, der Fehlerschätzer 21, der Selektor 22, die Paralellpfadrechner 11, 12 oder der Parallelpfad-Vergleicher 23 sind mit bekannten Bausteinen, wie Verstärkern, Komparatoren oder logischen Bausteinen aufgebaut. Diese sind dem Fachmann aus den bekannten Navigationssystemen geläufig und müssen daher nicht näher erläutert werden. Anstelle von einzelnen Bausteinen ist auch ein oder mehrere Mikrorechner vorsehbar, die mit einem entsprechenden Steuerprogramm gesteuert werden.

## Patentansprüche

1. Korrekturverfahren für ein kartengestütztes Navigationssystem, bei dem durch Koppelortung eine fiktive Position eines Kraftfahrzeugs bestimmt und diese als Ist-Position vorzugsweise auf einer Straßenkarte einer Anzeige ausgegeben wird, wobei die Ist-Position derart bestimmt wird, daß das Kraftfahrzeug auf einer in Fahrtrichtung in etwa parallel verlaufenden Straße aufgesetzt wird,
- wobei aus den von Fahrzeugsensoren (3) und/ oder von einem Navigationsgerät (4) gelieferten Signalen ein Fahrgebiet (24) für die Ist-Position (X2; X7; X11) des Fahrzeugs gebildet wird, wobei die ermittelte Ist-Position (X2; X7; X11) einen vorgegebenen Fehlerbereich für Längen- ,Quer- und/oder Richtungsfehler (25) umfaßt,
- wobei einem Kartenspeicher (2) alle Fahrstraßen entnommen werden, die im gebildeten Fahrgebiet (24) liegen und die somit den möglichen Hauptpfad und die möglichen Parallelpfade für den Fahrweg des Fahrzeugs bilden,
- wobei durch Plausibilitätsprüfung die Hauptpfadposition (X2;X7) auf die Straße (43;52) im Fehlerbereich (25) des bisherigen Hauptpfades (40;50) gesetzt wird, die dem durch Koppelortung bestimmten Fahrweg am nächsten liegt,
- wobei die anderen Pfade mit ihren möglichen Positionen (X3, X4;X9 bis X14), solange sie plausibel sind, als Parallelpfade weiterverfolgt werden und
- wobei bei weiteren Plausibilitätsprüfungen der bisherige Hauptpfad (43; 52; 62) oder einer der Parallelpfade als neuer Hauptpfad bestimmbar ist, wenn der mitgekoppelte Fahrweg mit dem jeweiligen Pfad am besten übereinstimmt,
**dadurch gekennzeichnet, daß** zu jedem Parallelpfad ein jeweiliger Fehlerbereich vorgegeben wird, der durch die jeweiligen, vorgegebenen Toleranzen der Fahrzeugsensoren bestimmt wird, wobei der Fehlerbereich (25) einen ein- oder zweidirnensionalen Bereich für Längen- oder Längen- und Querfehler und/oder einen Fahrtrichtungsbereich umfaßt und daß die Differenz zwischen einer gemessenen und einer Istposition des Fahrzeugs zur Korrektur der Längen- und Winkelmessung für die weitere Koppelortung zugrundegelegt wird.

2. Korrekturverfahren nach Anspruch 1, **dadurch gekennzeichnet, daß** ein Parallelpfad, der aus einem Parallelpfad oder einem Hauptpfad hervorgeht, die Bewertung und den Status dieses Haupt- oder Parallelpfades zunächst beibehält.

3. Korrekturverfahren nach nach einem der vorhergehenden Ansprüche, **dadurch gekennzeichnet, daß** der Parallelpfad als neuer Hauptpfad ausgewählt wird, dessen Richtung in etwa mit der mitgekoppelten Fahrtrichtung und/oder weiteren Parametern übereinstimmt.

4. Korrekturverfahren nach einem der vorhergehenden Ansprüche, **dadurch gekennzeichnet, daß** für die Pfadbewertung die jeweilige Übereinstimmung zwischen dem Neigungswinkel des Fahrzeugs und dem Steigungs-/Gefällwinkel des Straßenabschnitts und/oder die Lebensdauer des Pfades berücksichtigt wird.

5. Korrekturverfahren nach einem der vorhergehenden Ansprüche, **dadurch gekennzeichnet, daß** bei der Bewertung des Hauptpfades (43; 52; 62) und der Parallelpfade ein Hystereseverhalten gebildet wird, durch das ein Wechsel zu einem anderen Parallelpfad verzögert wird.

6. Korrekturverfahren nach einem der vorhergehenden Ansprüche, **dadurch gekennzeichnet, daß** der Längenfehler der Koppelortung **dadurch** korrigiert wird, daß nach einer Kurvenfahrt die ermittelte Fahrzeugposition (X1) im Vergleich zu einer im Fehlerbereich liegenden Straßenposition (X2) verglichen wird und deren Differenz zur Korrektur des Längenfehlers der Koppelortung verwendet wird.

7. Korrekturverfahren nach einem der vorhergehenden Ansprüche, **dadurch gekennzeichnet, daß** bei einer Neupositionierung des Kraftfahrzeugs die Positionsbestimmung mittels eines Navigations-Satellitenempfängers **dadurch** erfolgt, daß neben dem Hauptpfad (62) Parallelpfade (61, 63, 66, 67, 68) auf allen plausibel erscheinenden Straßen gebildet werden, die etwa parallel zur Fahrtrichtung D des Fahrzeugs verlaufen (Figur 6).

8. Korrekturverfahren nach Anspruch 7, **dadurch gekennzeichnet, daß** die Parallelpfade verworfen werden, die den Fehlerbereich der Satellitennavigations-Positionsermittlung verlassen haben.

9. Korrekturverfahren nach einem der vorhergehenden Ansprüche, **dadurch gekennzeichnet, daß** bei Verwendung eines Zielführungssystems (7) der aktuelle Hauptpfad (43; 52; 62) bei Pfadmehrdeutigkeiten vorzugsweise entlang der Zielroute geführt wird (Figur 5).

## Claims

1. Correction method for a map-assisted navigation system, in which a fictional position of a motor vehicle is determined by integrated position-finding, and this position is output as the actual position, preferably on a road map on a display, with the actual position being defined in such a way that the motor vehicle is placed on a road running approximately parallel to the direction of travel
- in which a travel region (24) for the actual position (X2; X7; X11) of the vehicle is formed from the signals supplied from the vehicle sensors (3) and/or from a navigation appliance (4), with the determined actual position (X2; X7; X11) comprising a predetermined error area for longitudinal, transverse and/or direction errors (25)
- in which all the roads which are located in the travel region (24) that has been formed and which thus form the possible main path and the possible parallel paths for the vehicle route are taken from a map store (2),
- in which a plausibility check is used to place that main path position (X2; X7) which is closest to the route found by integrated position-finding on the road (43; 52) in the error area (25) of the previous main path (40; 50),
- in which the other paths, together with their possible positions (X3, X4; X9 to X14), are tracked as parallel paths for as long as they are plausible, and
- in which further plausibility checks can be used to define the previous main path (43; 52; 62) or one of the parallel paths to be the new main path if the coupled route provides the best match with the respective path,
**characterized in that** a respective error area is predetermined for each parallel path and is defined by the respective, predetermined tolerances of the vehicle sensors, with the error area (25) comprising a one-dimensional or two-dimensional area for longitudinal errors or longitudinal and transverse errors and/or a direction of travel area, and **in that** the difference between a measured position and an actual position of the vehicle is used as the basis to correct the longitudinal and angular measurement for the rest of the integrated position-finding process.

2. Correction method according to Claim 1, **characterized in that** a parallel path which is based on a parallel path or a main path initially maintains the assessment and the status of this main or parallel path.

3. Correction method according to one of the preceding claims, **characterized in that** the parallel path which is selected as the new main path is that whose direction approximately matches the coupled direction of travel and/or other parameters.

4. Correction method according to one of the preceding claims, **characterized in that** the respective match between the angle of inclination of the vehicle and the gradient/slope angle of the road section and/or the life of the path is taken into account for path assessment.

5. Correction method according to one of the preceding claims, **characterized in that** a hysteresis behaviour is formed during the assessment of the main path (43; 52; 62) and the parallel paths, and is used to delay a change to another parallel path.

6. Correction method according to one of the preceding claims, **characterized in that** the longitudinal error of the integrated position-finding process is corrected **in that**, after a turn, the determined vehicle position (X1) is compared to a road position (X2) located in the error area, and the difference from this comparison is used to correct the longitudinal error of the integrated position-finding process.

7. Correction method according to one of the preceding claims, **characterized in that** when the motor vehicle is repositioned, the position is determined by means of a satellite navigation receiver in such a way that, in addition to the main path (62), parallel paths (61, 63, 66, 67, 68) are formed on all the roads which appear to be plausible and which run approximately parallel to the vehicle's direction of travel D (Figure 6).

8. Correction method according to Claim 7, **characterized in that** those parallel paths which have left the error area of the satellite navigation position determination process are rejected.

9. Correction method according to one of the preceding claims, **characterized in that**, when a destination routing system (7) is used, the present main path (43; 52; 62) is preferably routed along the route to the destination if there are any path ambiguities (Figure 5).

## Revendications

1. Procédé de correction d'un système de navigation s'appuyant sur des cartes et déterminant, par localisation à l'estime, une position fictive d'un véhicule automobile et donne cette position comme position réelle, de préférence sur une carte routière d'un moyen d'affichage, la position réelle étant définie en plaçant le véhicule sur une chaussée sensiblement parallèle à la direction de déplacement,
• à partir des signaux fournis par les capteurs (3) du véhicule et/ou un appareil de navigation (4), on forme une zone de déplacement (24) pour la position réelle (X2 ; X7 ; X11) du véhicule, la position réelle, déterminée (X2 ; X7 ; X11) comprenant une zone d'erreur (25), prédéterminée pour les erreurs dans la direction longitudinale transversale et/ou d'orientation,
• dans une mémoire à cartes (2) on prend toutes les chaussées qui se situent dans la zone de déplacement (24) formée, et constituant ainsi le chemin principal possible et les chemins parallèles possibles pour la trajectoire du véhicule,
• par un contrôle de plausibilité, on place la position du chemin principal (X2 ; X7) sur la chaussée (43 ; 52) dans la zone d'erreur (25) du chemin principal (40 ; 50) actuel, qui se trouve le plus près de la trajectoire du véhicule définie par une localisation à l'estime,
- on poursuit les autres chemins avec leur position possible ((X3, X4 ; X9-X14) aussi longtemps qu'ils sont plausibles, comme chemins parallèles et
- par d'autres contrôles de plausibilité on détermine comme nouveau chemin principal, le chemin principal actuel (43 ; 52 ; 62) ou l'un des chemins, parallèles si la trajectoire couplée coïncide le mieux avec le chemin respectif,
**caractérisé en ce que**
• pour chaque chemin parallèle on prédéfinit une zone d'erreur respective donnée par les tolérances prédéterminées respectives des capteurs du véhicule,
• la zone d'erreur (25) comprenant une zone à une ou deux dimensions pour les erreurs dans la direction longitudinale ou dans la direction longitudinale et dans la direction transversale, et/ou une zone de direction de déplacement, et
• on utilise comme base pour la suite de l'orientation à l'estime, la différence entre une position mesurée et une position réelle du véhicule pour corriger les mesures dans la direction longitudinale et les mesures angulaires.

2. Procédé de correction selon la revendication 1,
**caractérisé en ce qu'**
un chemin parallèle, qui découle d'un chemin parallèle ou d'un chemin principal, conserve tout d'abord l'évaluation et l'état de ce chemin principal ou parallèle.

3. Procédé de correction selon l'une quelconque des revendications précédentes,
**caractérisé en ce que**
comme nouveau chemin principal, on sélectionne le chemin parallèle dont la direction correspond sensiblement à la direction de déplacement couplée et/ou d'autres paramètres.

4. Procédé de correction selon l'une quelconque des revendications précédentes,
**caractérisé en ce que**
pour l'évaluation du chemin on tient compte de la concordance respective entre l'angle d'inclinaison du véhicule et l'angle de pente montant ou descendant du segment de chaussée et/ou la durée de vie du chemin.

5. Procédé de correction selon l'une quelconque des revendications précédentes,
**caractérisé en ce que**
pour l'évaluation du chemin principal (43 ; 52 ; 62) et du chemin parallèle on forme un comportement à hystérésis retardant tout changement d'un chemin parallèle à un autre.

6. Procédé de correction selon l'une quelconque des revendications précédentes,
**caractérisé en ce qu'**
on corrige l'erreur dans la direction longitudinale de la localisation à l'estime **en ce qu'**après un déplacement en courbe, on compare la position déterminée (X1) du véhicule à une position de chaussée (X2) située dans la plage d'erreur, et on utilise cette différence pour corriger l'erreur dans la direction longitudinale de la localisation à l'estime.

7. Procédé de correction selon l'une quelconque des revendications précédentes,
**caractérisé en ce que**
pour un positionnement nouveau du véhicule, on définit la position à l'aide d'un récepteur satellite à navigation, **en ce qu'**à côté du chemin principal (62) on forme des chemins parallèles (61, 63, 66, 67, 68) sur toutes les chaussées apparaissant comme plausibles, et qui sont sensiblement parallèles à la direction de déplacement (D) du véhicule (figure 6).

8. Procédé de correction selon la revendication 7,
**caractérisé en ce qu'**
on rejette les chemins parallèles qui sortent de la zone d'erreur de la détermination de position de navigation par satellite.

9. Procédé de correction selon l'une quelconque des revendications précédentes,
**caractérisé en ce que**
dans l'application d'un système de conduite vers un objectif (7), on fait passer le chemin principal actuel (43 ; 52 ; 62) en cas de caractère non univoque du chemin, de préférence le long du chemin de destination (figure 5).
